# FASCICULE DE BREVET EUROPEEN

(11) **EP 0 816 002 B1**
(45) Date de publication et mention de la délivrance du brevet: **05.07.2000**
(21) Numéro de dépôt: 97401485.4
(22) Date de dépôt: 26.06.1997
(51) Int. Cl.: B23K 9/16

(54) **Boîte de confinement de gaz utilisée avec une tête de soudage**
Mit einem Schweisskopf versehene geschlossene Gasdose
Gas confinement box used in combination with a welding head

(30) Priorité: 27.06.1996 FR 9607980
(43) Date de publication de la demande: 07.01.1998
(73) Titulaire: Snecma Moteurs, 75015 Paris (FR)
(72) Inventeur: Camy, Florent, 77170 Nandy (FR); Zanolin, Gérard Louis, 91490 Oncy sur Ecole (FR)

(56) Documents cités:
- FR-A- 2 504 042
- SOVIET INVENTIONS ILLUSTRATED Section M, Week 8903, 01 Mars 1989 Derwent Publications Ltd., London, GB; Class M23, AN 89-021889/03, XP002025463 & SU 1 407 723 A (SOYUZUGLEMASH COMBI) 07 Juillet 1988
- PATENT ABSTRACTS OF JAPAN vol. 14, no. 80 (C-0689) 15 Février 1990 & JP 01 298 145 A (ONODA CEMENT CO LTD) 01 Décembre 1989

## Description

L'invention concerne une boîte de confinement de gaz utilisée avec une tête de soudage selon le préambule de la revendication 1, une telle boite de confinement étant connue du document FR-A-2 504 042.

Certains procédés de soudage nécessitent de recourir à une atmosphère neutre, ce qui peut être réalisé en enfermant la machine de soudage et les pièces à souder dans une enceinte ou en soufflant le gaz neutre en une gaine entourant le faisceau d'énergie et la zone fondue. La consommation de gaz est grande dans les deux cas, car le volume de l'enceinte ou le débit de soufflage doit être important. C'est pourquoi une autre solution est proposée avec l'invention, selon laquelle le confinement est obtenu par une boîte partiellement solidaire de la tête de soudage et que la tête de soudage traverse. Cette boîte peut être posée sur une partie seulement des pièces à souder pour envelopper le joint de soudure, bien qu'elle puisse aussi entourer totalement ces pièces. Le gaz est donc confiné dans un volume clos, mais de volume beaucoup plus petit qu'une enceinte dans laquelle toute la machine serait enclose ; et, bien que la boîte doive être ouverte pour livrer passage à la tête de soudage et éventuellement pour n'envelopper qu'une partie des pièces à souder, il n'est besoin de ne souffler qu'un débit très faible de gaz de protection car les fuites sont négligeables.

Dans sa définition la plus générale, l'invention concerne une boîte de confinement de gaz utilisée avec une tête de soudage, comprenant un cadre, un carénage garni d'un premier joint d'étanchéité reposant sur une pièce à souder à un pourtour libre opposé à un pourtour de fixation au cadre, un couvercle glissant sur le cadre dans un plan, un second joint d'étanchéité disposé sur un pourtour du cadre et frottant sur le couvercle, et une cloche fixée à la tête de soudage, engagée dans un manchon traversant le couvercle et s'étendant perpendiculairement au plan, la cloche coulissant et étant ajustée de façon étanche dans le manchon ; et avantageusement, la cloche est ajustée dans le manchon par une portion sphérique.

L'invention va maintenant être décrite plus en détail à l'aide des figures suivantes, annexées à titre illustratif et non limitatif :
- la figure 1 est une vue en coupe de l'invention,
- et la figure 2 est une vue en perspective de la boîte sur une pièce à souder, le robot de soudage étant aussi partiellement représenté.

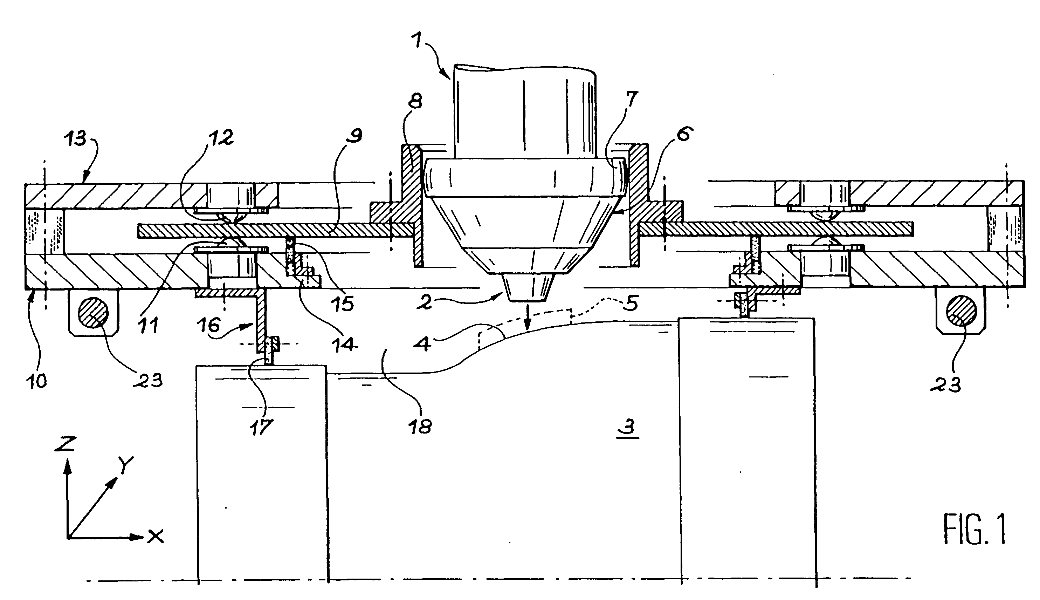

Reportons-nous d'abord à la figure 1. La tête de soudage porte la référence 1 et se termine en un bec 2 dirigé vers une pièce à souder, ici une roue 3 de rotor sur une circonférence médiane 4 de laquelle des aubes 5 doivent être soudées, ce qui implique que la tête 1 doit accomplir des trajectoires fermées de petite longueur devant la roue 3, ces trajectoires s'étendant principalement dans les directions horizontales X et Y, mais aussi dans la direction verticale Z puisque la circonférence médiane 4 est pentue et qu'il faut maintenir le bec à une distance constante d'elle. Enfin, l'orientation de la tête de soudage 1 doit être modifiée en tournant autour de l'aube 5.

Afin d'assurer ces différents mouvements tout en maintenant un volume clos autour de l'aube 5, on prévoit une cloche 6 solidaire de la tête de soudage 1 et disposée autour d'elle, peu derrière le bec 2, et cette cloche 6 comprend un renflement 7 en forme de tronc de sphère qui coulisse dans un manchon 8 de manière étanche quelle que soit l'inclinaison de la tête de soudage 1.

Le manchon 8 appartient à la boîte de confinement, dont la description commence à présent ; il est orienté dans la direction verticale Z et s'étend à travers un couvercle 9 circulaire. Un cadre 10 à pourtour circulaire ou rectangulaire est muni de deux cercles de billes 11 et 12 en regard, dont l'un est disposé sur le cadre 10 lui-même, et l'autre sous un rebord supérieur 13, et replié vers l'intérieur, du cadre 10.

Le couvercle 9 est retenu en direction verticale entre les cercles de billes 11 et 12, mais il peut se déplacer librement en direction horizontale, entraîné avec le manchon 8 par la tête de soudage 1, dans des limites assez étendues puisque le rebord supérieur 13 est beaucoup plus large que lui. Il peut même tourner le cas échéant.

Un bord interne 14 du cadre 10 porte une lèvre d'étanchéité 15 dont l'extrémité frotte sur la face inférieure du couvercle 9, maintenant l'étanchéité à cet endroit. Un carénage 16 est vissé sous le cadre 10 par son rebord supérieur ; il est façonné pour s'adapter à peu près à la forme de la roue 3 et, comme il est amovible, il est remplacé par un autre quand la machine de soudage est affectée à un autre travail. L'extrémité inférieure du carénage 16 porte une autre lèvre d'étanchéité 17 frottant sur la roue 3. On s'aperçoit que les deux lèvres 15 et 17, le carénage 16, le cadre 10, le couvercle 9, le manchon 8 et la cloche 2 délimitent un volume étanche 18 avec la roue 3, qu'il suffit d'emplir du gaz voulu pour créer l'atmosphère souhaitée autour du bec 2.

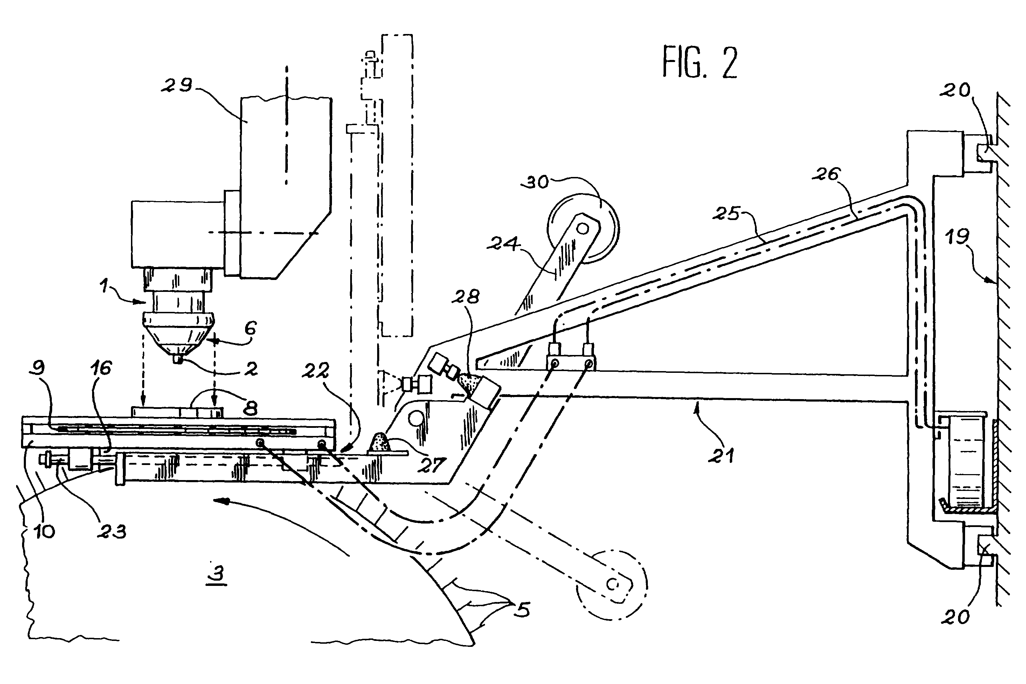

D'autres détails de l'invention sont visibles sur la figure 2, en particulier les moyens de soutien du cadre 10 : deux rails horizontaux 20 sont accrochés à une paroi 19 de la machine de soudage, afin de permettre à un chariot 21 de se déplacer le long de cette paroi, et un tablier basculant 22 est situé au bout du chariot 20 ; le cadre 10 y coulisse en glissant sur une paire de rails 23 encore visibles à la figure 1, horizontaux comme les précédents mais perpendiculaires à eux pour permettre au cadre 10 de s'éloigner ou de se rapprocher de la paroi 19 ; enfin, un bras 24 peut être basculé pour abaisser le tablier 22 et faire descendre le cadre 10 et le carénage 16 pour les poser sur la roue 3, ou au contraire le soulever pour dégager la roue 3, quand un rotor a été soudé et qu'il faut en placer un autre.

Deux conduites de gaz (par exemple d'argon et d'hélium) courant le long du chariot 21 et traversant le cadre 10 pour y insuffler l'atmosphère de composition voulue portent les références 25 et 26.

Deux tampons 27 et 28 sont fixés au tablier 22 pour le retenir dans des positions de rotation extrêmes, quand ils touchent des butées du chariot 21. Enfin, on a désigné par 29 le bras de la machine de soudage qui transporte la tête 1 le long de sa trajectoire. Comme la machine de soudage est de tout genre connu, ce bras n'est que partiellement représenté. Un contrepoids 30 est attaché au bras 24 pour ajuster la pression exercée par la lèvre 17 sur la roue 3.

## Revendications

1. Boîte de confinement de gaz destinée à être utilisée avec une tête de soudage (1), comprenant un cadre (10), un carénage (16) garni d'un premier joint d'étanchéité (17), prévu pour reposer sur une pièce à souder (3), à un pourtour libre opposé à un pourtour de fixation au cadre (10), un couvercle (9) glissant sur le cadre (10), caractérisée en ce que le couvercle glisse sur le cadre dans les deux directions d'un plan (X-Y) et en ce qu'elle comprend un second joint d'étanchéité (15) disposé sur un pourtour du cadre (10) et frottant sur le couvercle (9), une cloche (6) prévue pour être fixée à la tête de soudage (1), engagée dans un manchon (8) traversant le couvercle (9) et s'étendant perpendiculairement au plan (X-Y), la cloche (6) coulissant et étant ajustée de façon étanche dans le manchon (8).

2. Boîte de confinement de gaz selon la revendication 1, caractérisée en ce que la cloche est ajustée dans le manchon par une portion sphérique (7).

3. Boîte de confinement de gaz selon l'une quelconque des revendications 1 ou 2, caractérisée en ce que le cadre (10) est porté par un chariot (21) en étant mobile dans le plan (X-Y).

4. Boîte de confinement de gaz selon la revendication 3, caractérisée en ce que le cadre (10) est porté par un tablier basculant (22), pouvant être soulevé et abaissé, du chariot (21).

5. Boîte de confinement de gaz selon l'une quelconque des revendications 1 à 4, caractérisée en ce que le cadre (10) comprend un rebord (13), le cadre et le rebord étant muni de cercles de billes (11, 12) respectifs entre lesquels le couvercle (9) est retenu.

## Patentansprüche

1. Sicherheitsgasdose zur Verwendung mit einem Schweisskopf (1), bestehend aus einem Rahmen (10), einer Verkleidung (16) mit einer ersten Dichtung (17), die dazu vorgesehen ist, mit einem freien Umfang, der von einem Befestigungsumfang zur Befestigung an dem Rahmen (10) abgewandt ist, auf einem zu schweißenden Werkstück (3) aufzuliegen, wobei ein Deckel (9) verschiebbar an dem Rahmen (10) sitzt,
**dadurch gekennzeichnet,**
daß der Deckel (9) in den beiden Richtungen einer Ebene (X-Y) verschiebbar an dem Rahmen (10) sitzt und daß die Dose eine zweite Dichtung (15), die auf einem Umfang des Rahmens (10) sitzt und sich in Reibkontakt mit dem Deckel (9) befindet, und eine Glocke (6), die dazu vorgesehen ist, an dem Schweisskopf (1) befestigt zu werden, und die in einer sich senkrecht zu der Ebene (X-Y) durch den Deckel (9) erstreckenden Muffe (8) in Eingriff ist, aufweist, wobei die Glocke (6) verschiebbar ist und dicht in der Muffe (8) ausgerichtet wird.

2. Sicherheitsgasdose nach Anspruch 1, **dadurch gekennzeichnet, daß** die Glocke (6) in der Muffe (8) mit einem kugelförmigen Abschnitt (7) ausgerichtet wird.

3. Sicherheitsgasdose nach einem der Ansprüche 1 oder 2, **dadurch gekennzeichnet**, **daß** der Rahmen (10) von einem Wagen (21) gehalten wird und dabei in der Ebene (X-Y) verfahrbar ist.

4. Sicherheitsgasdose 3, **dadurch gekennzeichnet, daß** der Rahmen (10) auf einer kippbaren Platte (22) ruht, so daß er von dem Wagen (21) angehoben und abgesenkt werden kann.

5. Sicherheitsgasdose nach einem der Ansprüche 1 bis 4, **dadurch gekennzeichnet, daß** der Rahmen (10) einen umgebogenen Rand (13) aufweist, wobei der Rahmen (10) und der umgebogene Rand (13) mit Kugelringen (11 bzw. 12) versehen sind, zwischen denen der Deckel (9) gehalten wird.

## Claims

1. A gas confinement box for use with a welding head (1) and comprising a frame (10), a fairing (16) having a first seal (17) adapted to rest on an article (3) to be welded, the article (3) having an exposed periphery facing a fixing periphery of the frame (10), and a cover (9) sliding on the frame (10), characterised in that the coyer slides on the frame in two directions in a plane (X-Y) and the gas confinement box comprises a second seal (15) disposed on a periphery of the frame (10) and rubbing on the cover (9), and a hood (6) adapted to be secured to the welding head (1), the hood (6) being engaged in a sleeve (8) which extends through the cover (9) in a direction perpendicular to the plane (X-Y), the hood (6) sliding in the sleeve (8) and being a scaling-tight fit therein.

2. A gas confinement box according to claim 1, characterised in that the hood engages in the sleeve by way of a spherical part (7).

3. A gas confinement box according to claim 1 or claim 2, characterised in that the frame (10) is carried by a carriage (21) and can move in the plane (X-Y).

4. A gas confinement box according to claim 3, characterised in that the frame (10) is carried by a tilting apron (22) of the carriage (21), the apron being adapted to be raised and lowered.

5. A gas confinement box according to any of claims 1 to 4, characterised in that the frame (10) has a flange (13), the frame and the flange comprising respective circles of balls (11, 12) between which the cover (9) is retained.
